# EUROPEAN PATENT APPLICATION

(11) **EP 4 733 629 A1**
(43) Date of publication of application: **29.04.2026**
(21) Application number: 25210825.3
(22) Date of filing: 23.10.2025
(51) Int. Cl.: F16H 57/029, F16H 57/04, B60K 17/04, H02K 9/19, B60K 7/00, F16H 57/02

(54) **IMPROVED ELECTRIC TRACTION WHEEL HUB**

(30) Priority: 25.10.2024 IT 202400023892
(71) Applicant: IVECO S.P.A., 10156 Torino (IT)
(72) Inventor: PEREIRA DE LEMOS, José Francivaldo, 10156 Torino (IT); AIMO BOOT, Marco, 10156 Torino (IT); DE SOMMA, Michele, 10156 Torino (IT)
(74) Representative: Studio Torta S.p.A.

(57) **Abstract**

Wheel hub (1) for an axle (2) of a heavy vehicle, comprising a fixed portion (4) configured to be rigidly carried by one end of the axle (2) and a movable portion (3) configured to be carried by the end of the axle (2) so as to freely rotate with respect to the fixed portion (4) around an axis of rotation (A), the wheel hub (1) comprising an electric machine (M) and a transfer system (G), the electric machine (M) being axially interposed with respect to the transfer system (G) and both being carried by the fixed portion (4).

## Description

### CROSS-REFERENCE TO RELATED APPLICATIONS

This patent application claims priority from Italian patent application no. 102024000023892 filed on October 25, 2024, the entire disclosure of which is incorporated herein by reference.

### TECHNICAL FIELD

The invention relates to a wheel hub for an axle of a vehicle, in particular an integrated electric traction wheel hub for an axle of a heavy vehicle.

### KNOWN STATE OF THE ART

Heavy vehicles, such as commercial vehicles road transport, for example trucks, tend to be increasingly electrified in order to reduce their polluting emissions. In particular, such vehicles can be hybrid vehicles or purely electric vehicles.

In particular, electric vehicles comprise at least one electric axle, i.e. an axle equipped with electric machines such as motors/generators configured to deliver a torque to the wheel hubs so as to allow them to move or to recharge the battery modules of the vehicle when the latter is braking.

However, there is always a need to improve existing electric axles in order to reduce dimensions due to the presence of electric machines that affect the usable spaces of the vehicle as well as force changes to the suspension systems.

A similar need also applies to rims, which need to be optimally mounted on electric axles without compromising their structural characteristics.

To this end, it is known to provide in-wheel motors, i.e. wheel hubs with integrated electric traction.

However, these in-wheel motors are particularly bulky and difficult to assemble. Moreover, they are not particularly versatile, i.e. they can be used to provide a limited torque range.

Therefore, there is a need to make these in-wheel motors more compact, cost-efficient and versatile.

The object of the invention is to fulfil the aforementioned needs in an optimized and economic fashion.

### SUMMARY OF THE INVENTION

The aforesaid object is reached by an integrated electric traction wheel hub, an axle and a vehicle as claimed in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic longitudinal section view of an integrated electric traction wheel hub according to a first embodiment of the invention;
- Figure 1A is a schematic longitudinal section view of the wheel hub of figure 1 showing the torque lines transmitted during its operation;
- Figure 2 is a schematic longitudinal section view of an integrated electric traction wheel hub according to a second embodiment of the invention;
- Figure 2A is a schematic longitudinal section view of the wheel hub of figure 2 showing the torque lines transmitted during its operation;
- Figure 3 is a schematic longitudinal section view of an integrated electric traction wheel hub according to a third embodiment of the invention; and
- Figure 3A is a schematic longitudinal section view of the wheel hub of figure 3 showing the torque lines transmitted during its operation.

### DETAILED DESCRIPTION OF THE INVENTION

The accompanying figures show three embodiments of an integrated electric traction wheel hub 1 used on an axle 2 for a vehicle (not shown) such as a commercial vehicle, for example a truck. The axle 2 extends along a longitudinal axis A.

The wheel hub 1 comprises a fixed portion 4 rigidly carried by an end portion of the axle 2 and a movable portion 3 carried by said fixed portion 4 in a rotationally free manner and configured to be connected to a wheel W of the vehicle.

In detail, the fixed portion 4 comprises a connection portion 4' configured to be connected to the axle 2, an end portion 4'' opposite the connection portion 4 and an intermediate portion 4‴ axially interposed along the axis A between the connection portion 4' and the end portion 4".

The movable portion 3 basically comprises a cup-shaped end portion 3' wrapping at least the end portion 4'' and a flanged portion 3'' housed around the intermediate portion 4‴ and supported so as to freely rotate with respect to the latter by support means 5 such as rolling means, for example ball bearings or rollers.

In further detail, the flanged portion 3'' comprises a cylindrical portion 3a supported by the aforementioned support means 5 with respect to the intermediate portion 4‴, a first flange 3b radially extending with respect to the longitudinal axis A starting from the cylindrical portion 3a and advantageously manufactured as one single piece together with the latter.

The flanged portion 3'' also comprises a second flange 3b coupled in a rotary manner to the cylindrical portion 3a, longitudinally spaced apart from the first flange 3b and advantageously manufactured as a separate element relative to the latter.

The cup-shaped portion 3' basically comprises a cylindrical portion 3d with axis A, which surrounds the end portion 4'' of the fixed portion 2 and is connected to the flanged portion 3'', for example to the flange 3b, and a cover 3e facing the end portion 4'' along axis A.

In detail, the cup-shaped portion 3' defines a space 6 radially comprised, with respect to the axis A, within the cylindrical portion 3d and axially delimited by the cover 3e and the flanged portion 3'' and by the fixed portion 4 on the opposite side with respect to the axis A.

The space 6 is configured to house at least one electric machine M. In the embodiment shown, one single electric machine M is included, which is provided with a stator M' and a rotor M'' configured to electromagnetically interact in a known manner.

In detail, the stator M' is radially internal to the rotor M'' and they are both coaxial to the axis A. Furthermore, the electric machine M is located outside the wheel W, in particular axially external to the disc thereof along the longitudinal axis A.

In particular, the stator M' is carried around the fixed portion 4, in particular around the end portion 4", while the rotor M'' is carried by a rotor carrier 7 supported by the fixed portion, in particular by the end portion 4'', in a rotationally free manner.

If there were two electric machines, they would both commonly insist on the rotor carrier 7.

As further described below, the electric machine M is electrically powered and conditioned as disclosed hereinafter.

The rotor carrier 7 is connected to the movable portion 3 by means of a transfer system G. In the embodiment shown, the transfer system G is supported by the end portion 4'' and, as a consequence, is axially interposed between the electric machine M and the movable portion 3, as detailed below.

Advantageously, the movable portion 3 comprises an inner radial flange 3f radially extending from the cylindrical portion 3d towards the axis A and dividing the space 6 into a first portion 6' facing the cover 6e and housing the transfer system G and a second portion 6" facing the flanged portion 6'' and housing the electric machine M.

Advantageously, between the rotor carrier 7' and a stator carrier 7'', the wheel hub 1 comprises sealing means 8 configured to prevent lubricant or dirt from being transmitted from the second portion 6'' to the first portion 6' of the space 6.

Preferably, said sealing means 8 comprise gaskets, such as O-rings.

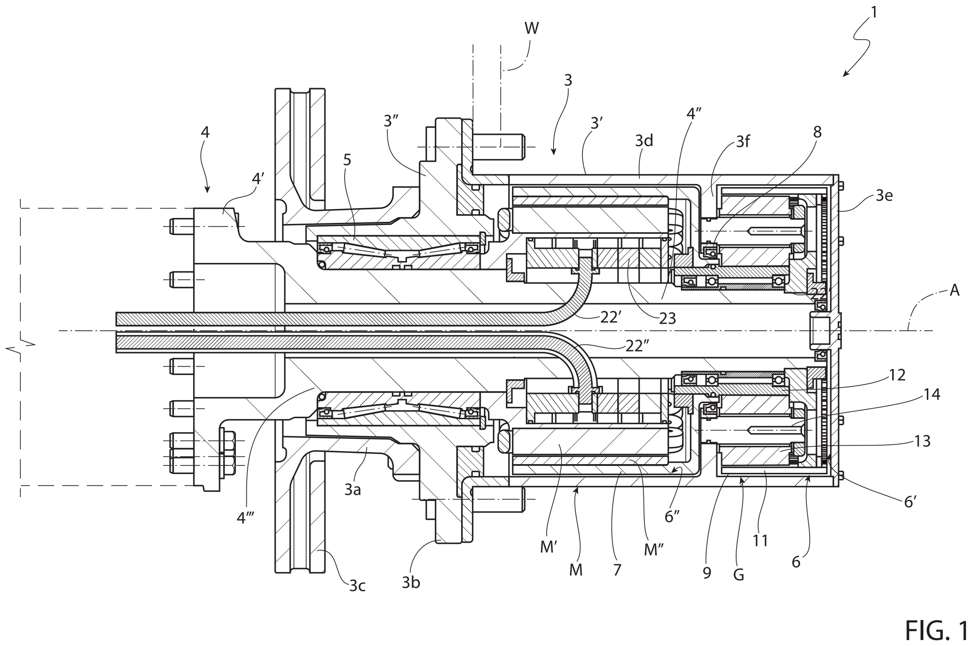

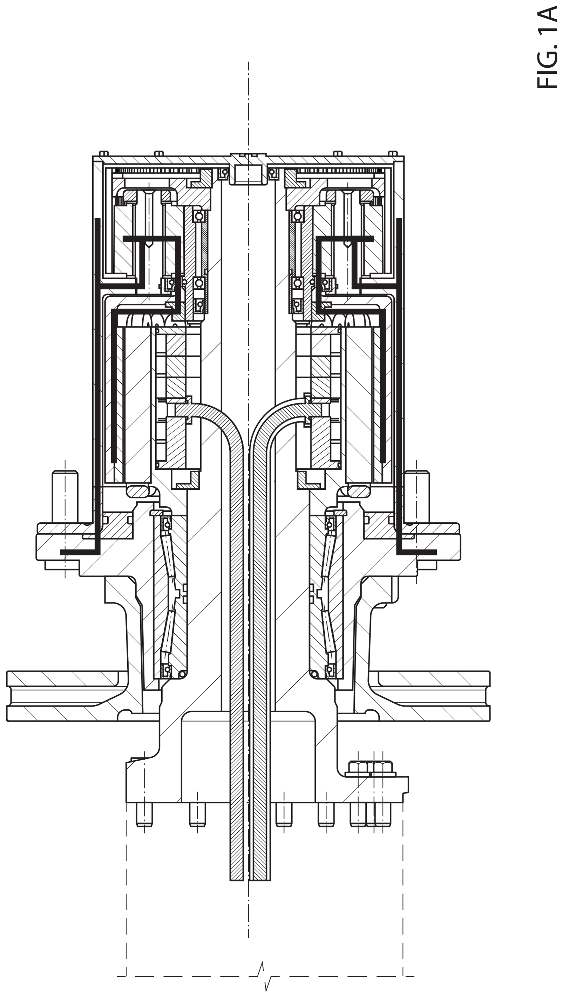

In the embodiment of figure 1 and 1A, the transfer system G comprises an epicyclic gearing 9, in particular of the standard type.

In particular, the epicyclic gearing 9 comprises a crown 11, a sun gear 12 and a plurality of satellites 13 meshing between the crown 11 and sun gear 12.

In particular, the crown 11 is rigidly carried by the fixed portion 4, in particular at the outer end 4', by means of a bell connected to it and enclosing the satellites 13 and the sun gear inside the portion 6'.

The sun gear 12 is carried around the outer end 4' in a rotationally free manner and dragged by the rotor carrier 7.

The satellites 13 are carried in a rotationally free manner around pins 14, which are rigidly carried by the movable portion 3, in particular by the inner radial flange 3f.

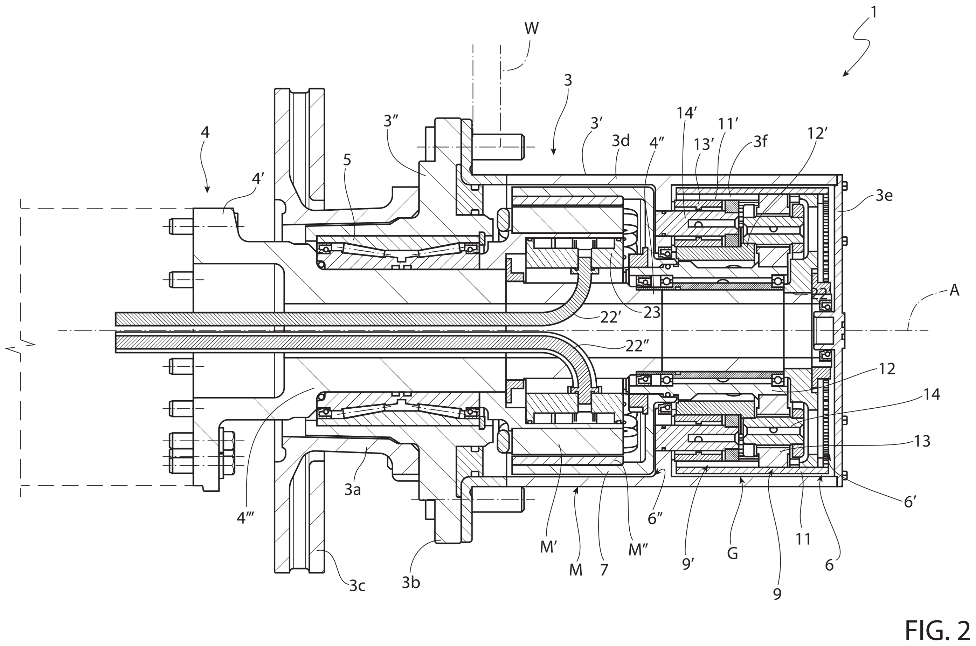

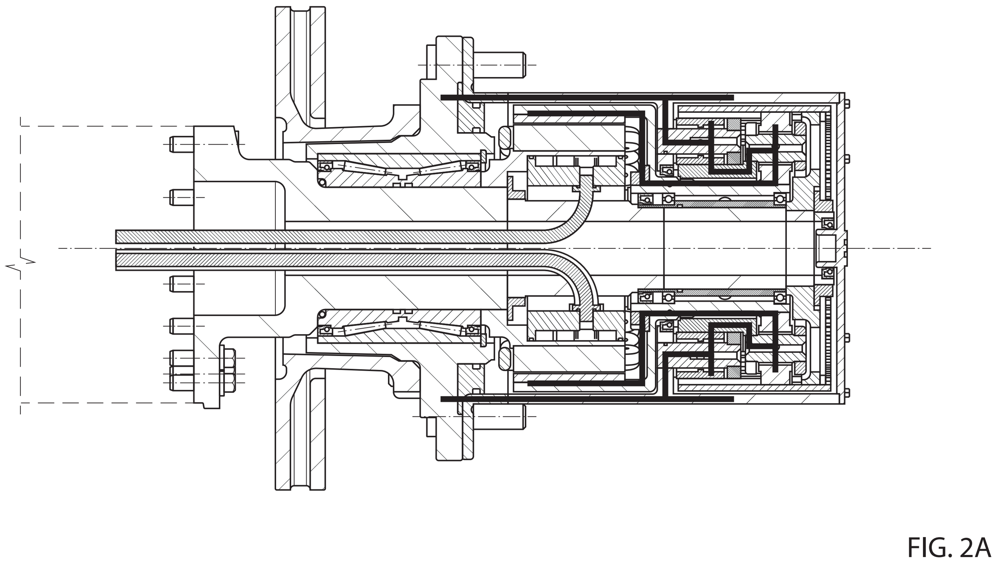

In the embodiment of figures 2 to 3A, the transfer system G comprises a first and a second gearing 9', 9'', one operatively in series to the other between the electric machine M and the rotary portion 3.

In detail, at least said first and second gearing 9', 9'' are epicyclic.

In the embodiment of figures 2 and 2A, in particular, the first epicyclic gearing 9 comprises a crown 11, a sun gear 12 and a plurality of satellites 13 meshing between the crown 11 and sun gear 12.

In particular, the crown 11 is rigidly carried by the outer end 4'' of the fixed portion 4, while the sun gear 12 is carried around the fixed portion 4 in a rotationally free manner and dragged by the rotor carrier 7.

The satellites 13 are carried in a rotationally free manner around pins 14, which are carried so as to freely rotate with respect to the fixed portion 4.

In detail, the second epicyclic gearing 9' comprises a crown 11', a sun gear 12' and a plurality of satellites 13' meshing between the crown 11' and sun gear 12'.

In particular, the crown 11' is integral to the crown 11 of the first gearing 9, while the sun gear 12' is carried around the fixed portion 4 in a rotationally free manner and dragged by the satellite carrier 14 of the first gearing 9.

The satellites 13' are carried in a rotationally free manner around pins 14', which are integral to the fixed portion 4.

In both embodiments, the satellite carriers 14, 14' are provided with ducts designed to allow a lubricant fluid to flow in the portion 6'' of the space 6.

In detail, the satellite carriers 14, 14' axially face one another so as to freely slide without contact, at least one pair of the ducts defined by said satellite carriers 14, 14' are parallel to one another so as to facilitate the passage of lubricant along the direction of the axis A between the two sides of the gears 9, 9'.

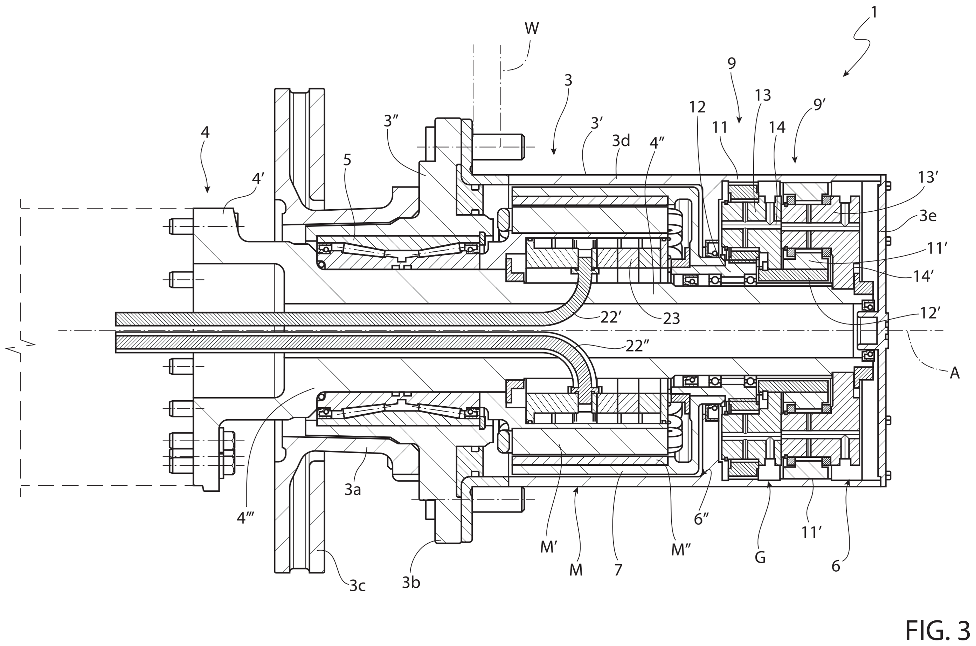

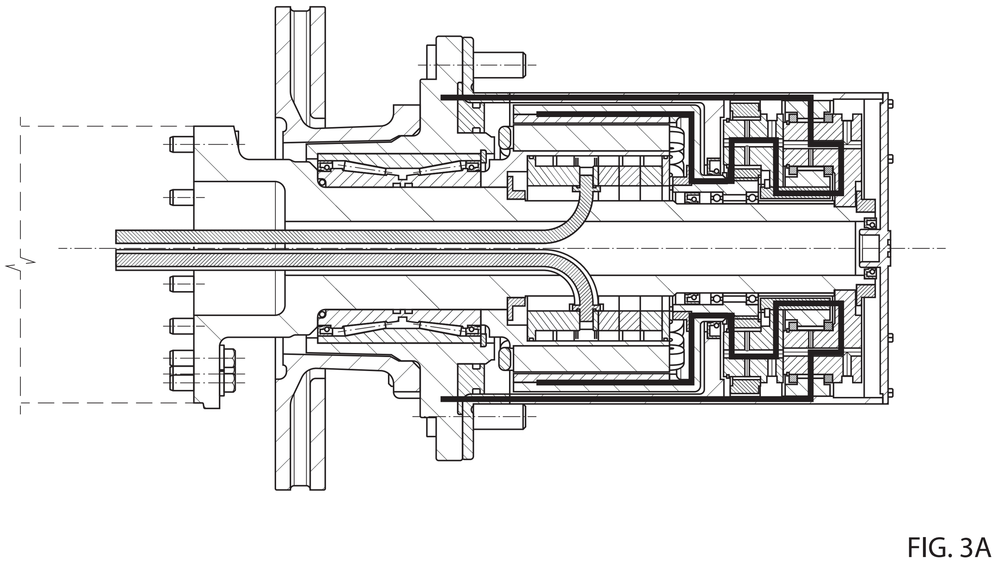

In the embodiment of figures 3 and 3A, the first epicyclic gearing 9 comprises a crown 11, a sun gear 12 and a plurality of satellites 13 meshing between the crown 11 and sun gear 12.

In particular, the crown 11 is rigidly carried by rotary portion 3, while the sun gear 12 is carried around the fixed portion 4 in a rotationally free manner and dragged by the rotor carrier 7.

The satellites 13 are carried in a rotationally free manner around pins 14, which are carried so as to freely rotate within the space 6.

In detail, the second epicyclic gearing 9' comprises a crown 11', a sun gear 12' and a plurality of satellites 13' meshing between the crown 11' and sun gear 12'.

In particular, the crown 11' is rigidly carried by rotary portion 3, while the sun gear 12' is carried around the fixed portion 4 in a rotationally free manner and dragged by the satellite carrier 14 of the first gearing 9.

The satellites 13' are carried in a rotationally free manner around pins 14', which are integral to the fixed portion 4.

In both embodiments, the satellite carriers 14, 14' are provided with ducts designed to allow a lubricant fluid to flow in the portion 6'' of the space 6.

In detail, the satellite carriers 14, 14' axially face one another so as to freely slide without contact, advantageously at the smallest distance possible, at least one pair of the ducts defined by said satellite carriers 14, 14' are coaxial so as to enable the passage of lubricant along the direction of the axis A between the two sides of the gears 9, 9'.

In both embodiments discussed above, the wheel hub 10 also comprises cables (not shown) for the electrical connection of the electric machine M to electrical energy storage means (not shown), such as a battery, of the vehicle.

These cables are advantageously housed within the space defined by the axle 2 and project out of it near the inner end 4'' and go through a dedicated opening, in a sealed manner, in the space 6, towards the stator M' of the electric machine M.

In both embodiments discussed above, the wheel hub 10 also comprises a conditioning system configured to cool the stator M' of the electric machine M. Advantageously, said conditioning system is a fluid conditioning system.

As shown in the accompanying figures, the conditioning system comprises a plurality of ducts 23, in which a conditioning fluid flows. Advantageously, these ducts 23 are integrated in the portion connecting the stator M' to the fixed portion 4.

Advantageously, the ducts 23 are fluidly connected to a delivery duct 22' and to a return duct 22'' by means of respective manifolds advantageously integrated in the portion connecting the stator M' to the fixed portion 4.

The delivery and return ducts 22', 22'' are fluidly connected to a heat exchanger system (not shown) of the vehicle, such as for example a passive exchanger, such as an air radiator, or an active device, such as a refrigerating conditioning circuit.

Advantageously, the delivery and return ducts 22', 22'' run parallel to the electric cables 21, hence parallel to the longitudinal axis A, and are housed inside the space of the fixed portion 4 of the space 6.

The operation of the embodiment of the wheel hub, axle and vehicle according to the invention disclosed above is the following, with reference to the torque lines of figures 1A, 2A, 3A.

In the first embodiment, shown in figure 1A, the torque is provided by the rotor M'', which is caused to rotate by the interaction with the stator M', which absorbs electrical energy from the storage means. This rotation is imparted to the rotor carrier 7, which drags the sun gear 12, which meshes with the satellites 13 rotating between it and the crown 11. This revolution drags the pins 14, which, for they are integral to the movable portion 3, cause the latter to rotate. In the case of a generator function, the operation is reversed and, therefore, the torque flows from the movable portion 3 towards the rotor M'', which, by interacting with the stator M', generates electrical energy that is stored in the aforementioned storage means.

In the second embodiment, shown in figure 2A, the torque is provided by the rotor M'', which is caused to rotate by the interaction with the stator M', which absorbs electrical energy from the storage means. This rotation is imparted to the rotor carrier 7, which drags the sun gear 12, which meshes with the satellites 13 rotating between it and the crown 11. This revolution drags the pins 14, which are integral to the sun gear 12' of the second epicyclic gearing 9'. The sun gear 12' meshes with the satellites 13', which, by rotating around the fixed pins 14', cause the rotation of the crown 11' integral to the movable portion 3 and, hence, cause the latter to rotate. In the case of a generator function, the operation is reversed and, therefore, the torque flows from the movable portion 3 towards the rotor M'', which, by interacting with the stator M', generates electrical energy that is stored in the aforementioned storage means.

In the third embodiment, shown in figure 3A, the torque is provided by the rotor M'', which is caused to rotate by the interaction with the stator M', which absorbs electrical energy from the storage means. This rotation is imparted to the rotor carrier 7, which drags the sun gear 12, which meshes with the satellites 13 rotating between it and the crown 11. This revolution drags the pins 14, which are integral to the sun gear 12' of the second epicyclic gearing 9'. The sun gear 12' meshes with the satellites 13', which, by rotating around the fixed pins 14', cause the rotation of the crown 11' integral to the movable portion 3 and, hence, cause the latter to rotate. In the case of a generator function, the operation is reversed and, therefore, the torque flows from the movable portion 3 towards the rotor M'', which, by interacting with the stator M', generates electrical energy that is stored in the aforementioned storage means.

In both embodiments, the passage through the transfer system G leads to an increase of torque in the motor function and increases the rotation of the rotor in the generator function, thus increasing the overall efficiency of the operation of the wheel hub.

In both embodiments, during operation, the conditioning system disposes of the heat generated by the operation of the electric machine M and the lubrication system lubricates the transfer system G.

Owing to the above, the advantages of a wheel hub, axle and vehicle according to the invention are evident.

Thanks to the structure disclosed herein, it is possible to provide an integrated electric traction axle thanks to the integrated electric traction hub with small dimensions and weights.

In particular, the housing of the electric machine in the wheel hub and outside the wheel itself and of the epicyclic transmission inside the space defined by the wheel hub makes it possible to obtain a very compact and light traction system, which is isolated from the external environment and, therefore, is protected from wear and dirt.

In addition, the use of an epicyclic gearing leads to a high gear ratio with an extremely small space taken up, both axially and radially. This advantage is even more pronounced in the case of compound epicyclic gearing.

The housing of the electric machine outside the gearing G allows it to be more easily replaced.

Furthermore, the integration of the cooling, lubrication and power supply systems inside the wheel hub allow for an easy and optimised assembly, reducing the manufacturing times of the axle.

Moreover, the axle and the wheel hub disclosed herein are modular and scalable according to different vehicle types and sizes.

Finally, the wheel hub, axle and vehicle according to the invention can be subjected to changes and variants, which, though, do not go beyond the scope of protection set forth in the appended claims.

Obviously, as mentioned above, the axle and the wheel hub can have different shapes and consist of more and different pieces.

In addition, the toothed wheels and the gears described above could change and there could be elements that are not described herein, but are known when dealing with the assembly of a wheel hub, axle and vehicle according to the invention.

Furthermore, although a twin wheel solution is described, the wheel hub can be applied to any type of wheel, even a single one.

## Claims

1. Wheel hub (1) for axle (2) of a heavy vehicle, said wheel hub (1) comprising a fixed portion (4) configured to be carried rigidly by one end of said axle (2) and a movable portion (3) configured to be carried rotationally freely by said end of said axle (2) and with respect to said fixed portion (4) around an axis of rotation (A),
said fixed portion (4) and said movable portion (3) delimiting with said fixed portion (4) a space (6) isolated from the external environment, said wheel hub (1) comprising an electric machine (M) housed in said space (6) and comprising a stator (M') carried integral with said fixed portion (4) and a rotor (M'') operatively connected to said movable portion (3),
said wheel hub (1) comprising a transfer system (G) housed in said space (6), said transfer system (G) connecting said rotor (M'') to said movable portion (6) so as to vary the speed/torque between said rotor (M'') and said movable portion (9),
said electric machine (M) and said transfer system (G) being carried by said fixed portion (4), said transfer system (G) being axially facing along said axis (A) to said electric machine (M), said electric machine (M) being axially internal with respect to said transfer system (G) along said axis (A).

2. Wheel hub according to claim 1, wherein said gearing is an epicyclic gearing (9).

3. Wheel hub according to claim 1 or 2, wherein said gearing is a compound/multistage epicyclic gearing (9, 9').

4. Wheel hub according to one of the preceding claims, wherein said space (6) is divided between a first portion (6') and a second portion (6'') separated from each other, said first portion (6') being axially internal with respect to said second portion (6"), said first portion (6') housing said transfer system (G) and said second portion (6") housing said electric machine (M).

5. Wheel hub according to claim 2, wherein said epicyclic gearing (9) comprises a crown (11), a sun gear (12) and a plurality of satellites (13), wherein said crown (11) is carried integral with said fixed portion (4), said sun gear (12) is driven by said rotor (M'') and carried rotationally free from said fixed portion (4), said satellites (13) meshing between said crown (11) and said sun gear (12) and being supported rotationally free by pins (14), said pins (14) being carried by said movable portion (3).

6. Wheel hub according to claim 4 and 5, wherein said space (6) is divided into two portions (6', 6'') by a flange (6f), said pins (14) being carried by said flange (6f) .

7. Wheel hub according to one of the preceding claims, wherein said transfer system (G) comprises a first epicyclic gearing (9) operatively connected to said rotor (M") and a second epicyclic gearing (9') operatively connected to said mobile portion (3) and operatively connected in series to said first epicyclic gearing (9).

8. Wheel hub according to claim 7, wherein said first epicyclic gearing (9) comprises a first crown (11), a first sun gear (12) and a first plurality of satellites (13), said second epicyclic gearing (9') comprises a second crown (11'), a second sun gear (12') and a second plurality of satellites (14'),
said first crown (11) being integral with said fixed portion (4), said first sun gear (12) being rotationally free from said fixed portion (4), said first plurality of satellites (13) meshing between said first sun gear (12) and said first crown (11), said satellites (13) being carried by respective first pins (14),
said second crown (11') being integral with said fixed portion (4), said second sun gear (12') being rotationally free from said fixed portion (4) and driven by said first pins (14), said second plurality of satellites (13') meshing between said second sun gear (12') and said second crown (11), said satellites (13') being carried by respective second pins (14') carried by said mobile portion (3).

9. Wheel hub according to claim 7, wherein said first epicyclic gearing (9) comprises a first crown (11), a first sun gear (12) and a first plurality of satellites (13), said second epicyclic gearing (9') comprises a second crown (11'), a second sun gear (12') and a second plurality of satellites (14'),
said first crown (11) being integral with said mobile portion (3), said first sun gear (12) being rotationally free from said fixed portion (4), said first plurality of satellites (13) meshing between said first sun gear (12) and said first crown (11), said satellites (13) being carried by respective first pins (14),
said second crown (11') being integral with said mobile portion (3), said second sun gear (12') being rotationally free from said fixed portion (4) and driven by said first pins (14), said second plurality of satellites (13') meshing between said second sun gear (12') and said second crown (11), said satellites (13') being carried by respective second pins (14') carried by said fixed portion (4).

10. Wheel hub according to one of the previous claims, comprising an air conditioning system (40) for said electric machine (M).

11. Wheel hub according to claim 9, wherein said air conditioning system is a fluid air conditioning system and comprises a plurality of ducts (23) adjacent to said electric machine (M) configured to allow the flow of an air conditioning fluid towards a heat exchange system of said vehicle.

12. Wheel hub according to one of the previous claims, wherein said fixed portion (4) defines an opening configured to allow the sealed connection of the electric machine (M) to an electric energy source of said vehicle via electric cables (21).

13. Wheel hub according to one of the preceding claims, comprising a lubrication system for said transfer system.

14. Wheel hub according to claim 13, when dependent on claim 9, wherein said first and second satellites (13, 13') are axially facing each other and define channels communicating with each other to allow the passage of lubricant supplied by said lubrication system.

15. Axle (2) extending along an axis (A) and respective wheel hubs (1) according to one of the preceding claims each carried by a respective end portion (3, 4).

16. Vehicle comprising an axle (2) according to claim 15.
